# EUROPEAN PATENT APPLICATION

(11) **EP 2 735 573 A1**
(43) Date of publication of application: **28.05.2014**
(21) Application number: 11869558.4
(22) Date of filing: 19.07.2011
(51) Int. Cl.: C08B 37/18

(54) **METHOD FOR PRODUCING INULIN**

(71) Applicant: Nippon Beet Sugar Manufacturing Co. Ltd., Tokyo 108-0073 (JP)
(72) Inventor: HORIUCHI, Kenichi, Obihiro-shi Hokkaido 080-0831 (JP); KIKUCHI, Hiroto, Obihiro-shi Hokkaido 080-0831 (JP); UCHINO, Hirokatsu, Obihiro-shi Hokkaido 080-0831 (JP); ARITSUKA, Tsutomu, Obihiro-shi Hokkaido 080-0831 (JP)
(74) Representative: Uchida, Kenji
(86) International application number: PCT/JP2011/066385
(87) International publication number: WO 2013/011566

(57) **Abstract**

[Problem] To provide a process for conveniently and efficiently extracting, separating, and purifying (desalting and decoloring) inulin from chicory. [Solution] A defecated liquid of a chicory raw juice is softened with a strongly acidic cation exchange resin. The resulting liquid is desalted with a strongly acidic cation exchange resin and then with a weakly basic anion exchange resin, followed by decoloring with a strongly basic anion exchange resin, desalting with a weakly basic anion exchange resin, and drying. A standard inulin and a highly polymerized inulin can be conveniently and efficiently separated and purified by separating standard inulin and highly polymerized inulin from each other after the softening treatment, or after the final desalting treatment.

## Description

### Technical Field

The present invention relates to a process for producing inulin from chicory. Specifically, the present invention is concerned with a process for extracting, separating, and purifying inulin (particularly, a standard inulin and a highly polymerized inulin) from chicory.

### Background Art

Chicory is an asteraceous plant, and the root is abundant of inulin, that is a water-soluble dietary fiber (polysaccharide). In Europe and other parts of the world, inulins and inulooligosaccharides are produced by using chicory as raw material and are utilized effectively. In Japan, a small amount of inulins are also produced by enzyme synthesis by using sugar as raw material and are utilized effectively.

Aside from chicory roots, inulin is polysaccharide which also found in many other plants. The structure of inulin is of 2 to 60 fructose units linearly bonded by a β (2-1) bond, and has a terminal glucose. Inulin generate fine crystals upon mixing with water or milk, and establish a cream-like texture, and as a result, provide a fat-like sensation in the mouth. This has made inulin a fat substitute material in dressings and in dairy products such as butter, margarine, cheese, and icecream. Inulin becomes more like fat and less sweet as the degree of polymerization increases.

Inulins have the bifidobacteria proliferating activity(prebiotics) as do other oligosaccharides, and are used by being added in foods, that contain enteric bacteria beneficial to humans such as in yogurt (probiotics), for the purpose of enhancing enteric bacteria improving effects (synbiotics) (Non-Patent Document 1).

Inulin production from chicory comprises multiple steps, including extraction with hot water or warm water, separation from other sugars, and removal of impurities. For example, a process is known in which warm water extraction is followed by crystallization. Another known process involves a defecation by liming treatment step, and a desalting and decoloring step. A number of processes are known for the desalting and decoloring of saccharides such as inulin, including a process that uses an ion exchange resin for desalting (Patent Document 1), and a process that uses an activated carbon powder for decoloring (Patent Document 2). However, as it currently stands, combining these methods is not satisfactory in terms of convenience and yield.

Over these backgrounds, there is a need in the relevant field of technology for further development of a more convenient and efficient separation and purification process more suited for inulin production from chicory. There is also a need for the development of a process of convenient and efficient separation and purification of inulins having an average polymerization degree of about 8 to 12 (standard inulin), and high-polymerization inulins having an average polymerization degree of about 20 to 30 (highly polymerized inulin).

### Citation List

### Patent Document

Patent Document 1: JP-A-2005-198569
Patent Document 2: W02004/078989

### Non-Patent Document

Non-Patent Document 1: J. Med. Microbiol., 47, 391-399 (1997)

### Summary of the Invention

### Problems that the Invention is to Solve

An object of the present invention is to provide a process for conveniently and efficiently extracting, separating, and purifying (desalting and decoloring) inulin from chicory.

### Means for Solving the Problems

To solve the foregoing problems, the present inventors made extensive researches, and found that extraction, separation, and purification of inulin from chicory was able to be conveniently and efficiently carried out by the simple procedures of softening a defecated liquid (or clean liquid) of a chicory raw juice with a strongly acidic cation exchange resin, desalting and decoloring the liquid by continuously passing it through ion exchange resins of predetermined properties in specific order, and drying the resulting inulin-containing liquid. The present invention was completed on the basis of this finding.

Specific exemplary embodiments of the present invention are as follows.
(1) A process for producing an inulin, comprising:
   softening a defecated liquid (clean liquid) of a chicory raw juice with a strongly acidic cation exchange resin;
   desalting the liquid with a strongly acidic cation exchange resin, and then with a weakly basic anion exchange resin, followed by decoloring with a strongly basic anion exchange resin and desalting with a weakly basic anion exchange resin; and
   drying the liquid.
(2)A process for producing a standard inulin, comprising:
   softening a defecated liquid of a chicory raw juice with a strongly acidic cation exchange resin;
   desalting the liquid with a strongly acidic cation exchange resin, and then with a weakly basic anion exchange resin, followed by decoloring with a strongly basic anion exchange resin and desalting with a weakly basic anion exchange resin;
   separating a highly polymerized inulin (average polymerization degree of 20 to 30); and
   drying the resulting liquid containing a standard inulin (average polymerization degree of 8 to 12).
(3) A process for producing a highly polymerized inulin, comprising:
   drying a liquid containing the highly polymerized inulin separated in the process of (2).
(4)A process for producing a standard inulin, comprising:
   softening a defecated liquid of a chicory raw juice with a strongly acidic cation exchange resin;
   separating a highly polymerized inulin (average polymerization degree of 20 to 30) from the liquid;
   desalting the resulting liquid containing a standard inulin (average polymerization degree of 8 to 12) with a strongly acidic cation exchange resin, and then with a weakly basic anion exchange resin, followed by decoloring with a strongly basic anion exchange resin and desalting with a weakly basic anion exchange resin; and
   drying the liquid.
(5) A process for producing a highly polymerized inulin, comprising:
   desalting a liquid containing the highly polymerized inulin separated in the process of (4) with a strongly acidic cation exchange resin, and then with a weakly basic anion exchange resin, followed by decoloring with a strongly basic anion exchange resin and desalting with a weakly basic anion exchange resin; and
   drying the liquid.
(6) The process according to any one of (2) to (5), wherein the highly polymerized inulin is separated by using at least one selected from crystallization, membrane separation, and chromatography.
(7) The process according to any one of (1) to (6), wherein the strongly acidic cation exchange resin used for the softening is of a Na type.
(8) The process according to any one of (1) to (7), wherein the strongly acidic cation exchange resin used for the desalting treatment is of a H type, the weakly basic anion exchange resin used for the desalting is of a OH type, and the strongly basic anion exchange resin used for the decoloring is of a Cl type.
(9) The process according to any one of (1) to (8), wherein the defected liquid of a chicory raw juice is a filtrate obtained by filtration after defecation by liming treatment of an extract (chicory raw juice) which is obtained by extracting a washed and cut chicory root with warm water, and/or a concentrate of thus obtained filtrate.
(10) The process according to any one of (1) to (9), wherein the solid content ration of the chicory raw juice before lime cleaning treatment (in other words, lime defecation treatment or defecation by liming treatment) is 5 to 25%.
(11) The process according to any one of (1) to (10), wherein the drying is spray drying and/or freeze drying.

### Advantage of the Invention

The present invention can conveniently extract and separate inulin (particularly, a standard inulin and a highly polymerized inulin) from chicory, and can efficiently purify (desalt and decolor) a defecated liquid of a chicory raw juice simply by continuously passing the liquid through ion exchange resins without employing a decoloring step that uses an activated carbon powder. The present invention is much more superior to conventional methods in terms of convenience, and suppressing lowering of yield and average polymerization degree.

### Brief Description of the Drawings

FIG. 1 shows an example of a flow chart illustrating the inulin production from chicory according to the present invention (without separation of a highly polymerized inulin and with separation of a highly polymerized inulin after desalting and decoloring).

FIG. 2 shows an example of a flow chart illustrating the inulin production from chicory according to the present invention (with separation of a highly polymerized inulin before desalting and decoloring).

### Mode for Carrying Out the Invention

The present invention is concerned with a process for extracting, separating, and purifying inulin (particularly, a standard inulin and a highly polymerized inulin) from chicory.
The term "inulin" as used herein refers to inulins with any average polymerization degree. "Standard inulin" as used herein is defined as an inulin with an average polymerization degree of 8 to 12 (average polymerization degree of approximately 10), and "highly polymerized insulin" as an insulin with an average polymerization degree of 20 to 30 (average polymerization degree of approximately 25).

In the present invention, a chicory root is used as a extraction raw material. Preferably, the chicory root is used after thoroughly removing soil (washing), and being finely cut (i.e., shred, pulverized) to make inulin extraction easier. In addition, 40 to 80°C warm water is used as extraction solvent, and the solvent is preferably 1 to 10 double quantity (preferably, 5 to 9 double quantity) for a raw material.

The extract (chicory raw juice) obtained as above is subjected to a defecation treatment that removes impurities such as proteins. The defecation treatment is preferably a defecation by liming treatment, though it is not limited to this. For defecation by liming treatment, it is preferable to reduce the solid content of the chicory raw juice (for example, 5 to 25%, further preferably 5 to 15%).

The chicory raw juice defecated as above (a defecated liquid of a chicory raw juice) is desalted and decolored by being continuously passed through ion exchange resins. In the present invention, the liquid is subjected to a softening treatment with a strongly acidic cation exchange resin, a desalting treatment with a strongly acidic cation exchange resin and a weakly basic anion exchange resin, a decoloring treatment with a strongly basic anion exchange resin, and a desalting treatment with a weakly basic anion exchange resin, in this order. Specifically, as the characteristics of the present invention, the hydrolysis of the inulin fructose chains by the acidic cation exchange resin, and the inulin adsorption by the basic anion exchange resin can be prevented, and desalting and decoloring can be efficiently carried out without lowering the inulin yield and the average polymerization degree of the inulin contained in the chicory. In addition, the amount of chicory clean liquid passing through each resin is desirably 1 to 5 double quantity (for example, 2.5 double quantity) against the resin, though it is not limited to this.

And, the strongly acidic cation exchange resin used as softening resin is more preferable to be a Na type, whereas the strongly acidic cation exchange resin for desalting treatment is preferably of a H type, the weakly basic anion exchange resin for desalting treatment is preferably of a OH type, and the strongly basic anion exchange resin used as decoloring resin is preferably of a Cl type, respectively. Specific examples of the strongly acidic cation exchange resin include Amberlite (here and below, the registered trademark of Rohm and Haas) 200CT, IR120B, IR124, and IR118, and Diaion (here and below, the registered trademark of Mitsubishi Chemical Corporation) SK1B, SK102, PK208, and PK212. Specific examples of the weakly basic anion exchange resin include Amberlite XE583, IRA67, and IRA96SB, and Diaion WA10, WA20, and WA30 etc. Specific examples of the strongly basic anion exchange resin include Amberlite IRA402BL, IRA400, IRA440B, IRA404, IRA900, IRA904, IRA411, IRA410, and IRA910, and Diaion SA10A, SA11A, PA306, PA308, SA20, and PA418 etc.

In addition, a highly polymerized inulin is preferably separated, above-mentioned, after the softening treatment and before the desalting and decoloring treatment, or before and after the desalting and decoloring treatment after the softening treatment. Examples of the separation method include crystallization, membrane separation, and chromatography, and these may be used in combination. The highly polymerized inulin separated before the desalting and decoloring treatment by crystallization or the like is redissolved in a solvent such as water, and purified to provide a pure liquid with the same method as the desalting and decoloring procedures performed for the standard inulin-containing liquid. The highly polymerized inulin separated by crystallization or the like after the desalting and decoloring treatment is redissolved in a solvent such as water to provide a purified liquid.

The desalted and decolored purified liquid (inulin-containing purified liquid, standard inulin-containing purified liquid, highly polymerized inulin-containing purified liquid) is dried into the product. The drying includes, for example, spray drying or freeze drying. The drying may be preceded by a predetermined pretreatment such as concentration.

The present invention, producing inulin from chicory as above, does not require an additional decoloring step that uses an activated carbon powder, and is highly effective in terms of convenience, and improving yield and maintaining the average polymerization degree of inulin.

The present invention will be explained in more detail by the following Examples. It should be noted that the present invention is not limited to the following Examples, and may be altered in many ways within the technical idea of the present invention.

### Example 1

### (Inulin Production I from Chicory)

Inulin production from the chicory root was examined by dividing the steps into extraction of a chicory raw juice, and softening and purification with ion exchange resins.

First, the amount of the water (warm water) required for inulin extraction from chicory was examined. After shredding the chicory root, the shreds were added to warm water, while being heated to 60 °C, used 3 or 8 double quantity for a sample. The mixture was extracted for 90 min while being stirred at 300 rpm to obtain the extract. With respect to thus obtained extract (chicory raw juice), the inulin content and the average polymerization degree of inulin were measured by performing calculations according to the method described in Industrial Crops and Products, 6, 195-199 (1997). It was found that water should preferably be used in 8 double quantity for a chicory (Table 1).

**[Table 1]**

| Chicory (g) | Amount of extraction water (mL) | Inulin extraction rate with respect to chicory root weight (%) | Average polymerization degree of inulin |
|---|---|---|---|
| 25 | 75 | 10 | 13 |
| 10 | 80 | 14 | 13 |

### Example 2

### (Inulin Production II from Chicory)

With respect to the chicory raw juice (8-fold group) obtained in Example 1, chicory defecated liquid was obtained by a defecation treatment by liming. Then, it's desalting conditions with ion exchange resins are examined.

Because of the possibility of the acid hydrolysis of the inulin by a hydrogen-type (H-type) strongly acidic cation exchange resin, conditions that can remove cations while preventing inulin hydrolysis in the chicory pure liquid were investigated.

First, glass columns were respectively charged with a Na-type strongly acidic cation exchange resin (Diaion SK1B; 200 mL; as softening column), a H-type strongly acidic cation exchange resin (Diaion SK1B; 200 mL; as desalting column), and a OH-type weakly basic anion exchange resin (Diaion WA20; 200 mL; as desalting column). The chicory defecated liquid (500 mL) adjusted to 10% (w/w) was then passed through each column under the following conditions.
Passing rate: 0.2 L/hr
Passing temperature: 35.C

### Condition 1:

The sample was continuously passed through the Na-type strongly acidic cation exchange resin, the H-type strongly acidic cation exchange resin, and the OH-type weakly basic anion exchange resin, in this order.

### Condition 2:

The sample was continuously passed through the Na-type strongly acidic cation exchange resin and the H-type strongly acidic cation exchange resin in order, and the resulting liquid was passed through the OH-type weakly basic anion exchange resin.

It was found that removal of cations was possible while preventing inulin hydrolysis when the sample was continuously passed through the H-type strongly acidic cation exchange resin and the OH-type weakly basic anion exchange resin (Table 2).

**[Table 2]**

| | Condition 1 | Condition 2 |
|---|---|---|
| Cation removal rate | 95% | 95% |
| Inulin yield | 99% | 5% |

### Example 3

### (Inulin Production III from Chicory)

Because inulin is easily adsorbed by the hydroxy-type (OH-type) basic anion exchange resin, a test was conducted to select a basic anion exchange resin that can remove anions while preventing from adsorbing the inulin contained in the chicory purified liquid on an ion exchange resin.

First, glass columns were respectively charged with 200 mL of Na-type strongly acidic cation exchange resin (Diaion SK1B) as softening column, 200 mL of H-type strongly acidic resin (Diaion SK1B) as desalting column, and 200 mL of OH-type basic ion exchange resin as desalting column. 500 mL of chicory defecated liquid adjusted to 10% (w/w) was then continuously passed through each column. The sample was passed under the following conditions:
Passing rate: 0.2 L/hr
Passing temperature: 35.C

Among the basic resins tested, the OH-type strongly basic anion exchange resin had high inulin adsorbability, and the OH-type weakly basic anion exchange resin was found to be suitable for production (Table 3). It was also found that, the ion exchange resin adsorbed the inulin when the OH-type strongly basic anion exchange resin was used, whereas anions could be removed while adsorption of the inulin by the ion exchange resin was prevented when the weakly basic anion exchange resin was used (Table 3).

**[Table 3]**

| | Weakly basic anion exchange resin | | | Strongly basic anion exchange resin | |
|---|---|---|---|---|---|
| | WA10 | WA20 | WA30 | PA308 | IRA410 |
| Anion removal | 97% | 96% | 98% | 99% | 99% |
| Inulin yield | 98% | 99% | 75% | 5% | 5% |

It was found from these results that the H-type strongly acidic cation exchange resin and the OH-type weakly basic anion exchange resin were preferable for use in the desalting of the chicory defecated liquid, and that continuous sequential passage through the H-type strongly acidic cation exchange resin and the OH-type weakly basic anion exchange resin was desirable.

### Example 4

### (Inulin Production IV from Chicory)

Decoloring conditions of a chicory defecated liquid with ion exchange resins were examined. 200 mL of Cl-type strongly basic anion exchange resin (Diaion PA308) as decoloring column was charged into a glass column. 500 mL of chicory defecated liquid adjusted to 10% (w/w) was then passed through the column under the following conditions.
Passing rate: 0.2 L/hr
Passing temperature: 35.C

It was found that the Cl-type strongly basic anion exchange resin was capable of decoloring the sample without lowering the inulin yield and the average polymerization degree of the inulin in the chicory defecated liquid (Table 4).

**[Table 4]**

| | Decoloring rate (%) | Inulin yield(%) | Polymerization Degree of inulin |
|---|---|---|---|
| Chicory defecated liquid | - | - | 12.9 |
| Decolored liquid by resin | 98 | 99 | 12.8 |

### Example 5

### (Inulin Production V from Chicory)

For the adequate sequences of colums charged with ion exchange resins , it was examined by which the chicory defecated liquid can be efficiency desalted and decolored. Glass columns were respectively charged with 200 mL of Na-type strongly acidic cation exchange resin (Diaion SK1B) as softening column, 200 mL of H-type strongly acidic cation exchange resin (Diaion SK1B) as desalting column, 200 mL of OH-type weakly basic anion exchange resin (Diaion WA20) as desalting column, and 200 mL of Cl-type strongly basic anion exchange resin (Diaion PA308) as decoloring column. 500 mL of chicory defecated liquid adjusted to 10% (w/w) was then passed through each column under the following conditions.
Passing rate: 0.2 L/hr
Passing temperature: 35.C

### Condition 1 (Sequence 1):

The sample was continuously passed through the Na-type strongly acidic cation exchange resin, the H-type strongly acidic cation exchange resin, and the OH-type weakly basic anion exchange resin, in this order.

### Conditions 2 (Sequence 2):

The sample was continuously passed through the Na-type strongly acidic cation exchange resin, the H-type strongly acidic cation exchange resin, the Cl-type strongly basic anion exchange resin, and the OH-type weakly basic anion exchange resin, in this order.

### Condition 3 (Sequence 3):

The sample was continuously passed through the Na-type strongly acidic cation exchange resin, the H-type strongly acidic cation exchange resin, the OH-type weakly basic anion exchange resin, and the Cl-type strongly basic anion exchange resin, in this order.

### Condition 4 (Sequence 4):

The sample was continuously passed through the Na-type strongly acidic cation exchange resin, the H-type strongly acidic cation exchange resin, the OH-type weakly basic anion exchange resin, the Cl-type strongly basic anion exchange resin, and the OH-type weakly basic anion exchange resin, in this order.

As a result, decoloring was insufficient by using sequence 1. Inulin hydrolysis occurred by using sequence 2. Chloride ions leaked out of the decoloring column, and as a result, the anion removal rate decreased by using sequence 3. However, the chicory defecated liquid was efficiency desalted and decolored by using sequence 4 (Table 5).

**[Table 5]**

| | Inulin Yield(%) | Average polymerization degree of inulin | Cation removal rate (%) | Anion removal rate(%) | Decolorin rate(%) |
|---|---|---|---|---|---|
| Chicory Defecated liquid | - | 13 | - | - | - |
| Sequence 1 | 98 | 12.9 | 98 | 94 | 85 |
| Sequence 2 | 80 | 11.5 | 99 | 98 | 98 |
| Sequence 3 | 98 | 12.8 | 98 | 88 | 95 |
| Sequence 4 | 98 | 12.9 | 98 | 98 | 98 |

It was found from these results that the chicory defecated liquid can be efficiency desalted and decolored under certain ion exchange resin conditions, specifically by continuously passing the liquid through the Na-type strongly acidic cation exchange resin, the H-type strongly acidic cation exchange resin, the OH-type weakly basic anion exchange resin, the Cl-type strongly basic anion exchange resin, and the OH-type weakly basic anion exchange resin, in this order.

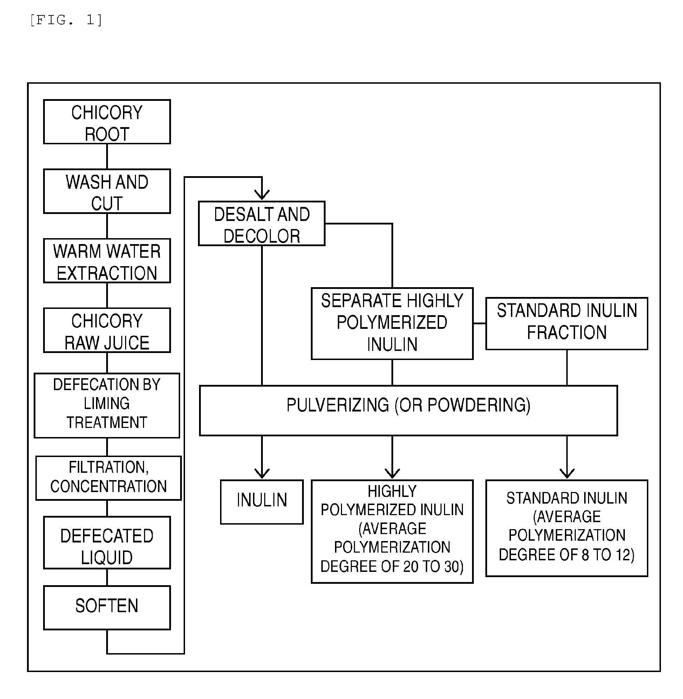

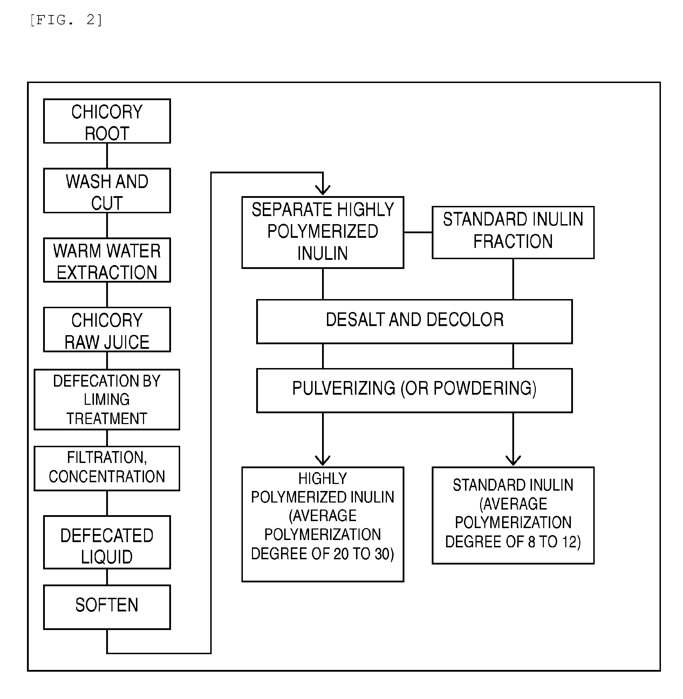

Especially, in inulin producing steps, since the liquid passed through the ion exchange resins is formed into a final product by pulverizing(or powdering), the impurities cannot be transferred in molasses through crystallization. Therefore, the purification by ion exchange resin is needed to remove the impurities and colors until the impurity and color levels are sufficient for production of a final product. The present inventors examined types of desalting and decoloring exchange resins, and the sequences of the resins in the purification step, and then found the optimum conditions with which the impurities and colors can be sufficiently removed without affecting the yield and the polymerization degree of inulin. The flows of inulin producing steps of the present invention based on the foregoing results are represented in FIGS. 1 and 2.

### Example 6

### (Inulin Production VI from Chicory)

In light of these results, an inulin was produced from chicory according to the flows of FIGS. 1 and 2.

10.0 kg of chicory root was washed with cold water, and cut with a food processor after removing the outer layer. After adding water of 8 double quantity for a chicory, the mixture was extracted with warm water while being stirred at 60.C for 90 min.

The resulting extract (chicory raw juice) was filtered through a filter paper, and the filtrate was subjected to a defecation treatment by liming, and concentrated under reduced pressure until Bx (Brix: sugar content rate of an aqueous solution) 10.

The chicory defecated liquid obtained as above was passed through the ion exchange resins under the same condition as condition 4 of Example 5. Then, the liquid was freeze dried to obtain a white inulin powder of 1 kg.

The resulting white inulin powder was dissolved in water, crystallized, and separated into a crystal fraction and a filtrate fraction by centrifugal separation. The crystal fraction was obtained as a highly polymerized inulin of 400 g. (The filtrate fraction was freeze dried to obtain a standard inulin fraction of 600 g.)

The present invention can be summarized as follows:

The present invention is intended to provide a method for conveniently and efficiently extracting and separating inulin, and purifying (desalting and decoloring) inulin from chicory.

A defecated liquid of a chicory raw juice is softened with a strongly acidic cation exchange resin. The resulting liquid is desalted with a strongly acidic cation exchange resin and then with a weakly basic anion exchange resin, followed by decoloring with a strongly basic anion exchange resin, and desalting with a weakly basic anion exchange resin, and then drying. A standard inulin and a highly polymerized inulin can be conveniently and efficiently separated and purified by separating these inulins from each other after the softening treatment, or after the final desalting treatment.

## Claims

1. A process for producing an inulin, comprising:
softening a defecated liquid of a chicory raw juice with a strongly acidic cation exchange resin;
desalting the liquid with a strongly acidic cation exchange resin, and then with a weakly basic anion exchange resin, followed by decoloring with a strongly basic anion exchange resin and desalting with a weakly basic anion exchange resin; and
drying the liquid.

2. A process for producing a standard inulin, comprising:
softening a defecated liquid of a chicory raw juice with a strongly acidic cation exchange resin;
desalting the liquid with a strongly acidic cation exchange resin, and then with a weakly basic anion exchange resin, followed by decoloring with a strongly basic anion exchange resin and desalting with a weakly basic anion exchange resin;
separating a highly polymerized inulin (average polymerization degree of 20 to 30); and
drying the resulting liquid containing a standard inulin (average polymerization degree of 8 to 12).

3. A process for producing a highly polymerized inulin, comprising:
drying a liquid containing the highly polymerized inulin separated in the process of claim 2.

4. A process for producing a standard inulin, comprising:
softening a defecated liquid of a chicory raw juice with a strongly acidic cation exchange resin;
separating a highly polymerized inulin (average polymerization degree of 20 to 30) from the liquid;
desalting the resulting liquid containing a standard inulin (average degree of polymerization of 8 to 12) with a strongly acidic cation exchange resin, and then with a weakly basic anion exchange resin, followed by decoloring with a strongly basic anion exchange resin and desalting with a weakly basic anion exchange resin; and
drying the liquid.

5. A process for producing a highly polymerized inulin, comprising:
desalting a liquid containing the highly polymerized inulin separated in the process of claim 4 with a strongly acidic anion exchange resin, and then with a weakly basic anion exchange resin, followed by decoloring with a strongly basic anion exchange resin and desalting with a weakly basic anion exchange resin; and
drying the liquid.

6. The process according to any one of claims 2 to 5, wherein the highly polymerized inulin is separated by using at least one selected from crystallization, membrane separation, and chromatography.

7. The process according to any one of claims 1 to 6, wherein the strongly acidic cation exchange resin used for the softening is of a Na type.

8. The process according to any one of claims 1 to 7, wherein the strongly acidic cation exchange resin used for the desalting treatment is of a H type, the weakly basic anion exchange resin used for the desalting is of a OH type, and the strongly basic anion exchange resin used for the decoloring is of a Cl type.

9. The process according to any one of claims 1 to 8, wherein the defecated liquid of a chicory raw juice is a filtrate obtained by filtration after defecation by liming treatment of an extract (chicory raw juice) which is obtained by extracting a washed and cut chicory root with warm water, and/or a concentrate of thus obtained filtrate.

10. The process according to any one of claims 1 to 9, wherein the solid content of the chicory raw juice before defecation by liming treatment is 5 to 25%.

11. The process according to any one of claims 1 to 10, wherein the drying is spray drying and/or freeze drying.
